## Europäisches Patentamt
## European Patent Office
## Office européen des brevets

(19)

(11) Veröffentlichungsnummer: **0 180 726**
**B1**

(12)

# EUROPÄISCHE PATENTSCHRIFT

(45) Veröffentlichungstag der Patentschrift:
**27.01.88**

(51) Int. Cl.⁴: **G 01 D 13/28, G 12 B 11/04**

(21) Anmeldenummer: **85110406.7**

(22) Anmeldetag: **20.08.85**

(54) **Anzeigegerät.**

(30) Priorität: **10.10.84 DE 3437164**

(43) Veröffentlichungstag der Anmeldung:
**14.05.86 Patentblatt 86/20**

(45) Bekanntmachung des Hinweises auf die Patenterteilung:
**27.01.88 Patentblatt 88/4**

(84) Benannte Vertragsstaaten:
**DE FR GB IT**

(56) Entgegenhaltungen:
**DE - B - 1 272 570**
**US - A - 3 559 616**

(73) Patentinhaber: **VDO Adolf Schindling AG,
Gräfstrasse 103, D-6000 Frankfurt/Main (DE)**

(72) Erfinder: **Friepes, Gerhard, Steinfurter
Hauptstrasse 118, D-6350 Bad Nauheim 4 (DE)**

(74) Vertreter: **Klein, Thomas, Dipl.-Ing. (FH), Sodener
Strasse 9 Postfach 6140, D-6231 Schwalbach a. Ts. (DE)**

## Beschreibung

Die Erfindung bezieht sich auf ein Anzeigegerät mit einem lichtleitenden Zeiger, welcher eine Einkoppelfläche zum Einleiten des von einer Lichtquelle stammenden Lichtes hat. Solche Anzeigegeräte sind beispielsweise in Kraftfahrzeugen vorhanden und allgemein bekannt.

Die Praxis zeigt, dass es oftmals übersehen wird, wenn der Zeiger eines Anzeigegerätes sich in einen kritischen Bereich bewegt. Deshalb ordnet man häufig in solchen Anzeigegeräten eine Warnlampe an, die bei Erreichen und Überschreiten des kritischen Bereiches aufleuchtet. Ein typisches Beispiel für diesen Stand der Technik ist die Füllstandsanzeige in Kraftfahrzeugen. Wenn nur noch eine Reservemenge Kraftstoff vorhanden ist, dann befindet sich der Zeiger des Anzeigegerätes in einem rot markierten Skalenbereich und zusätzlich leuchtet eine rote Warnlampe.

Solche einen Zeiger und eine Warnlampe aufweisende Anzeigegeräte ziehen zwar bei Erreichen des kritischen Bereichs die Aufmerksamkeit des Fahrers auf sich, sind jedoch durch die Anordnung der Warnlampe und des für sie erforderlichen Schalters beträchtlich teurer als Anzeigegeräte ohne Warnlampe.

Der Erfindung liegt die Aufgabe zugrunde, ein Anzeigegerät der eingangs genannten Art zu entwickeln, welches bei Erreichen eines kritischen Bereichs vergleichbar stark die Aufmerksamkeit auf sich zieht, wie ein Anzeigegerät mit Warnlampe, jedoch kostengünstiger hergestellt werden kann.

Diese Aufgabe wird erfindungsgemäss dadurch gelöst, dass jeweils nur ein Teil der Lichteinkoppelfläche von der Lichtquelle beleuchtet wird und dass zumindest ein Teilbereich der Einkoppelfläche andersfarbig ausgebildet ist als der übrige Bereich der Einkoppelfläche.

Durch diese Gestaltung wird erreicht, dass der Zeiger andersfarbig leuchtet, sobald das Licht durch den andersfarbigen Teilbereich der Lichteinkoppelfläche in den Zeiger flutet. Bei einer Füllstandsanzeige kann der Zeiger beispielsweise rot leuchten, wenn ein Reservebereich überschritten wird. Dadurch wird ein hoher Aufmerksamkeitsgrad erreicht, ohne dass hierzu kostspielige Massnahmen erforderlich sind.

Die Anwendung der Erfindung ist selbstverständlich nicht auf Füllstandsanzeigen beschränkt. Ein Thermometer für die Wassertemperatur eines Motors kann zum Beispiel einen Zeiger haben, der bei zu geringer Wassertemperatur blau, bei richtiger Temperatur grün und bei zu hoher Wassertemperatur rot leuchtet.

Besonders einfach kann der andersfarbige Teilbereich erzeugt werden, wenn er mit einer farbigen Folie überzogen ist.

Die Folie lässt sich kostengünstig durch Heissprägen aufbringen.

Der Beginn des zu signalisierenden Teilbereiches lässt sich besonders exakt festlegen, wenn die Einkoppelfläche am Beginn des andersfarbigen Bereichs eine Abstufung hat.

Da in Anzeigegeräten der Platz im Bereich der Drehachse des Zeigers meist knapp ist, bereitet es Schwierigkeiten, dort eine Lichtquelle anzuordnen. Platzprobleme können jedoch auf einfache Weise vermieden werden, wenn zwischen der Lichtquelle und der Einkoppelfläche ein Lichtleiter angeordnet ist.

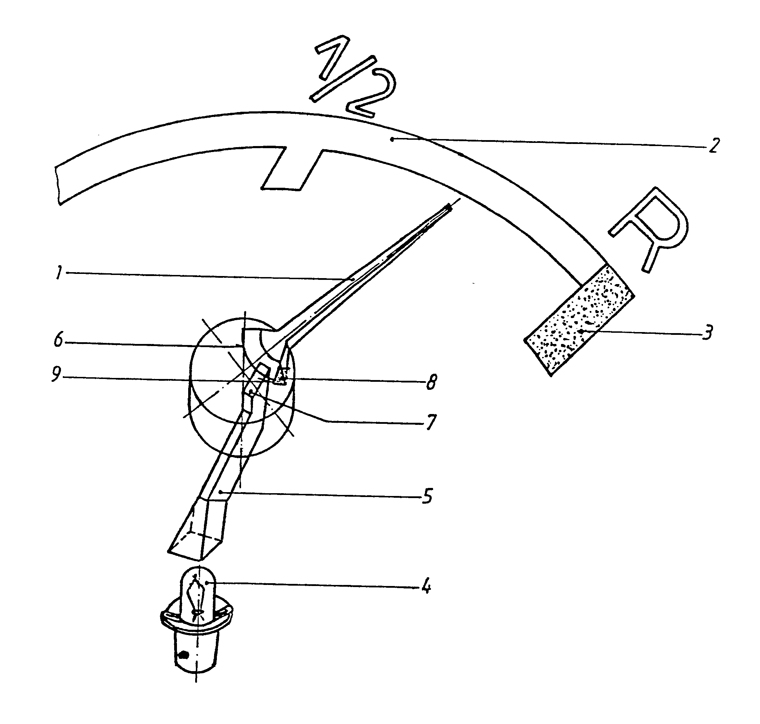

Die Erfindung lässt zahlreiche Ausführungsformen zu. Zur Verdeutlichung ihres Grundprinzips ist eine davon in der Zeichnung dargestellt und wird nachfolgend beschrieben. Die Zeichnung zeigt eine perspektivische Schemadarstellung eines die Erfindung betreffenden Bereiches eines Anzeigegerätes.

Bei dem dargestellten Anzeigeinstrument handelt es sich um die Füllstandsanzeige in einem Kraftfahrzeug. Das Anzeigeinstrument hat einen Zeiger 1 aus lichtleitendem Material, der sich entlang einer Skale 2 zu bewegen vermag. Wenn nur noch eine Reservemenge Kraftstoff vorhanden ist, dann befindet sich der Zeiger 1 in einem auf der Skala 2 rot markierten Bereich 3.

Um das Anzeigeinstrument auch nachts ablesen zu können, ist im Anzeigeinstrument eine Lichtquelle 4 in Form einer einfachen Lampe angeordnet, von der aus Licht durch einen Lichtleiter 5 zum Zeiger 1 zu gelangen vermag. Zu diesem Zweck hat der Zeiger 1 an seiner Unterseite eine Einkoppelfläche 6, die über eine Auskoppelfläche 7 streicht. Wenn der Zeiger 1 den auf der Skala rot markierten Bereich 3 erreicht, dann gelangt gleichzeitig ein farbig markierter Teilbereich 8 der Einkoppelfläche 6 über die Auskoppelfläche 7. Dieser Teilbereich 8 ist gegenüber dem übrigen Bereich der Einkoppelfläche 6 erhaben und beginnt mit einer Abstufung 9. Erzeugt werden kann der andersfarbige Teilbereich 8 beispielsweise durch eine Folie, die durch Heissprägen auf den Teilbereich 8 aufgebracht wird.

Mit Erreichen des andersfarbigen Teilbereiches 8 beginnt sich der Zeiger 1 entsprechend der Farbe des Teilbereiches 8 zu verfärben, so dass der Fahrer leicht auf das Erreichen oder Überschreiten dieses Teilbereiches aufmerksam wird.

## Patentansprüche

1. Anzeigegerät mit einem lichtleitenden Zeiger (1), welcher eine Lichteinkoppelfläche (6) zum Einleiten des von einer Lichtquelle (4) stammenden Lichtes hat, *dadurch gekennzeichnet*, dass jeweils nur ein Teil der Lichteinkoppelfläche (6) von der Lichtquelle (4) beleuchtet wird und dass zumindest ein Teilbereich (8) der Einkoppelfläche (6) andersfarbig ausgebildet ist als der übrige Bereich der Einkoppelfläche (6).

2. Anzeigegerät nach Anspruch 1, *dadurch gekennzeichnet*, dass der Teilbereich (8) mit einer farbigen Folie überzogen ist.

3. Anzeigegerät nach Anspruch 1 oder einem der folgenden, *dadurch gekennzeichnet*, dass die Folie durch Heissprägen aufgebracht ist.

4. Anzeigegerät nach Anspruch 1 oder einem der folgenden, *dadurch gekennzeichnet,* dass die Einkoppelfläche (6) am Beginn des andersfarbigen Bereichs (8) eine Abstufung (9) hat.

5. Anzeigegerät nach Anspruch 1 oder einem der folgenden, *dadurch gekennzeichnet,* dass zwischen der Lichtquelle (4) und der Einkoppelfläche (6) ein Lichtleiter (5) angeordnet ist.

## Claims

1. An indicating device with a light-conducting needle (1) having a light input surface (6) to introduce the light coming from a light source (4), *characterised in that* the light source (4) only ever illuminates part of the light input surface (6) and that at least one portion (8) of the input surface (6) is of a different colour from the remaining area of the input surface (6).

2. The indicating device according to Claim 1, *characterised in that* the portion (8) is coated with a coloured film.

3. The indicating device according to Claim 1 or any one of the following Claims, *characterised in that* the film is applied by hot stamping.

4. The indicating device according to Claim 1 or any one of the following Claims, *characterised in that* the input surface (6) has a graduation (8) at the start of the differently coloured portion (8).

5. The indicating device according to Claim 1 or any one of the following Claims, *characterised in that* between the light source (4) and the input surface (6) there is disposed a light pipe (5).

## Revendications

1. Appareil indicateur à aiguille (1) conduisant la lumière, qui comporte une surface (6) d'introduction de la lumière, destiné à faire passer la lumière émanant d'une source lumineuse (4), appareil caractérisé en ce que seule une partie de la surface (6) d'introduction de la lumière est éclairée à tout instant par la source lumineuse (4) et en ce qu'une partie (8) au moins de cette surface (6) est colorée autrement que le reste de ladite surface (6).

2. Appareil indicateur selon la revendication 1, caractérisé en ce que la partie (8) est recouverte d'une feuille ou pellicule colorée.

3. Appareil indicateur selon la revendication 1 ou celle qui la suit, caractérisé en ce que la pellicule est appliquée par estampage à chaud.

4. Appareil indicateur selon la revendication 1 ou l'une des revendications suivantes, caractérisé en ce que la surface (6) d'introduction de lumière présente un décrochement (9) au début de la partie (8) autrement colorée.

5. Appareil indicateur selon la revendication 1 ou l'une des suivantes, caractérisé en ce qu'un conducteur (5) de guidage de lumière est disposé entre la source lumineuse (4) et la surface (6) d'introduction de lumière.